# EUROPEAN PATENT SPECIFICATION

(11) **EP 2 652 912 B1**
(45) Date of publication and mention of the grant of the patent: **10.06.2015**
(21) Application number: 11793601.3
(22) Date of filing: 18.11.2011
(51) Int. Cl.: H04L 12/28, H04N 21/436

(54) **CONTENT SHARING BETWEEN A UNIVERSAL PLUG AND PLAY DEVICE AND A WIDE AREA NETWORK DEVICE**
GEMEINSAME INHALTSNUTZUNG ZWISCHEN EINEM UNIVERSAL PLUG AND PLAY-GERÄT UND EINEM WIDE AREA NETZWERKGERÄT
PARTAGE DE CONTENU ENTRE UN DISPOSITIF UNIVERSAL PLUG AND PLAY ET UN DISPOSITIF RÉSEAU ÉTENDU

(30) Priority: 13.12.2010 US 966005
(43) Date of publication of application: 23.10.2013
(73) Proprietor: Motorola Mobility LLC, Libertyville, IL 60048 (US)
(72) Inventor: MCINERNEY, John, Belvidere, Illinois 61008 (US); NASCIMENTO, Fernando Luis, 13085 Campinas (BR)
(74) Representative: Boult Wade Tennant
(86) International application number: PCT/US2011/061325
(87) International publication number: WO 2012/082309

(56) References cited:
- EP-A1- 1 276 296
- EP-A2- 1 809 005

## Description

### TECHNICAL FIELD

Embodiments of the subject matter described herein relate generally to data communication and digital content delivery systems. More particularly, embodiments of the subject matter relate to techniques and technology for sharing digital content between a Universal Plug and Play (UPnP) network device and a Wide Area Network (WAN) device.

### BACKGROUND

Data communication systems, computer networks, and digital content delivery systems are well known. Digital content such as pictures, music, or video may be delivered from one electronic device to another using a number of conventional wireless and non-wireless data communication schemes, including Wi-Fi, BLUETOOTH short range wireless, USB, cellular-based messaging, or the like. Moreover, a network of electronic devices (e.g., a television set, a personal computer, a digital camera, and a home theater receiver) can be operated in accordance with local network technology such as that set forth by the Digital Living Network Alliance (DLNA) to enable the exchange of digital content among the members of that local network.

The prior art is somewhat limited in that it does not include or contemplate effective and user-friendly techniques that bridge digital content sharing between local network devices (e.g., a DLNA network) and devices external to the local network (e.g., WAN devices).

EP1276296A1 (HEWLETT PACKARD CO [US]) discloses a method for enabling a mobile communication device to control a player device. The mobile communication device downloads content from a content provider and forwards the content to the player device for display.

EP1809005A2 (NOKIA CORP [FI]) discloses a method for enabling remote access to a local network. Local network devices are registered at an external DynDNS server.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a block diagram of an exemplary embodiment of a system having a mobile content relay device operating in a local network;
FIG. 2 is a block diagram of an exemplary embodiment of a mobile content relay device;
FIG. 3 is a flow chart that illustrates an exemplary embodiment of a network server operating process;
FIG. 4 is a flow chart that illustrates an exemplary embodiment of a WAN-to-DLNA content delivery process;
FIG. 5 is a flow chart that illustrates an exemplary embodiment of a DLNA-to-WAN content delivery process; and
FIG. 6 is a flow chart that illustrates another exemplary embodiment of a WAN-to-DLNA content delivery process.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions, and the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The exemplary embodiments presented here relate to the sharing of digital content between a device operating in local network environment (e.g., a UPnP network) and a device operating in a WAN (e.g., a remote computer with Internet access, a cellular telephone, or a mobile electronic device). More specifically, the embodiments presented here extend UPnP content sharing to server-located contacts, which may be associated with an instant messaging (IM) application, a social networking website, a text messaging application, or the like. In certain implementations, content maintained by a DLNA network server can be shared with server-based contacts in a transparent fashion by using a mobile device (such as a mobile telecommunication device) operating in the DLNA network as a content relay device that relays the content to a destination WAN device that is not a member of the DLNA network. Alternatively or additionally, a user of a WAN device can view a contacts list that includes one or more DLNA devices "owned" by a different user. Rich presence attributes related to the DLNA device may be presented at the WAN device to allow the user of the WAN device to view the current operating and/or availability status of those DLNA devices. This feature allows the user of the remote WAN device to send content to a selected DLNA device, via a mobile content relay device that is currently available and operating in the destination DLNA network.

The system described here may be deployed to support common consumer applications, such as those found in typical home entertainment environments. The system described here may also be deployed in connection with various commercial, business, or government environments. For example, the system could be used by news agencies, reporters, and broadcasting stations to accommodate the sharing and distribution of news content. As another example, the system could be used by business or corporate entities to distribute media-based work product among employees, customers, clients, sales contacts, or the like. Thus, although embodiments described here relate to a typical home-user implementation, the subject matter is not limited to such a deployment.

Although not always required, in certain implementations the mobile content relay device is a cellular device that also supports Wi-Fi (IEEE Specification 802.11x). The mobile content relay device may be realized using any suitable platform, e.g., a telephone, a smartphone, a portable computer, a videogame device, a digital media player, or the like. The mobile content relay device supports UPnP (and, in particular embodiments, DLNA technology) and any type of protocol or scheme that provides access to server-based contacts (e.g., Instant Messaging and Presence Service (IMPS), Open Mobile Alliance (OMA) Presence, Extensible Messaging and Presence Protocol (XMPP), or the like). Consequently, the functionality of the mobile content relay device can be implemented by leveraging the definitions and capabilities set forth in existing standards and specifications, and the mobile content relay device need not support or require any new or under-development standards, protocols, or technologies.

In accordance with on exemplary use case, a user of a cellular device or a WAN-based computer desires to send content to a DLNA renderer device operating in a remote user's DLNA network. The sender's device displays a contacts list that includes the DLNA renderer device as an entry. The contacts list may also indicate the availability status of that DLNA renderer device. The user of the sender device can then communicate selected content, such as a video file, to the DLNA renderer device. A mobile content relay device operating in the remote user's DLNA network receives the incoming content and relays it to the desired DLNA renderer device, which then presents the content using its native rendering capabilities.

In another exemplary use case, several mobile phone users are connected together in a local DLNA/UPnP network environment in which they can share digital content. Allowing each mobile phone to expose its available server-maintained contacts list dramatically increases the number of destination devices (people) available for content sharing.

In accordance with another operating scenario, a mobile device that is active and operating in a first user's DLNA network functions as a mobile content relay device between the DLNA server (which stores the digital content to be shared) and a remote destination device operating in a WAN. In this regard, the destination device may be considered to be a "virtual" DLNA renderer device from the perspective of the DLNA network. For this use case, the mobile content relay device retrieves the desired content directly or indirectly from the DLNA server device using, for example, a UPnP protocol with Wi-Fi as the transport mechanism. Thus, the mobile content relay device may function as a DLNA controller device with relay capabilities or strictly as a relay device, depending upon the DLNA network topology and the particular operating scenario. The mobile content relay device communicates the outgoing content using, for example, IMPS with a cellular telecommunication scheme as the transport mechanism. In this regard, the mobile content relay device could use Universal Mobile Telecommunications System (UMTS) or any suitable third-generation, fourth-generation, or other technology. After receiving the communication from the mobile content relay device, the virtual renderer device can present the received content using its native rendering capabilities.

The techniques and technologies presented here result in a transparent mechanism to bridge the rich media content (audio, video, images, etc.) available on UPnP servers to users identified as server-located contacts, using an appropriate message transmission protocol such as OMA IMPS, OMA SIMPLE (SIP for Instant Messaging and Presence Leveraging Extensions), or the like. Contacts from a mobile device contacts list could be registered by the mobile device as virtual UPnP renderers, and those virtual renderers would be available to the UPnP control points like other renderer devices in the UPnP network. The mobile device itself will function as a relay or proxy device for the UPnP network for each of those contacts.

When a transfer is requested to a contact renderer, the data stream from the UPnP server is routed to the contact renderer within the mobile device via the UPnP transfer protocol. The contact renderer within the mobile device will then buffer the incoming stream, and it may create a temporary file to buffer all of the received digital content before proceeding. As the content is received (or at some time after the entire content is received), the content renderer transfers the content to the selected server-located contact (or contacts) seamlessly within a message by communicating with the transmission protocol available at the mobile device. In certain implementations, the UPnP control points and the UPnP server follow Digital Rights Management policies for the media content.

The mobile device can be suitably configured to control, based on various attributes and operating status, which virtual renderer devices are exposed as "contacts" to other devices. Moreover, the concepts presented here can be extended to email and Multimedia Messaging Service (MMS) contacts, blogging capabilities, and other server-based contacts systems that might be associated with the mobile device. If a server-based contact is accessed via a protocol that supports streaming, the incoming stream could be re-sent to the contact without the need to create a temporary buffering file (as mentioned above). In addition, the techniques and technologies described here need not be limited to mobile devices per se. Rather, the concepts presented here could be extended to non-wireless devices, such as personal desktop computers having Internet access and/or UPnP network access.

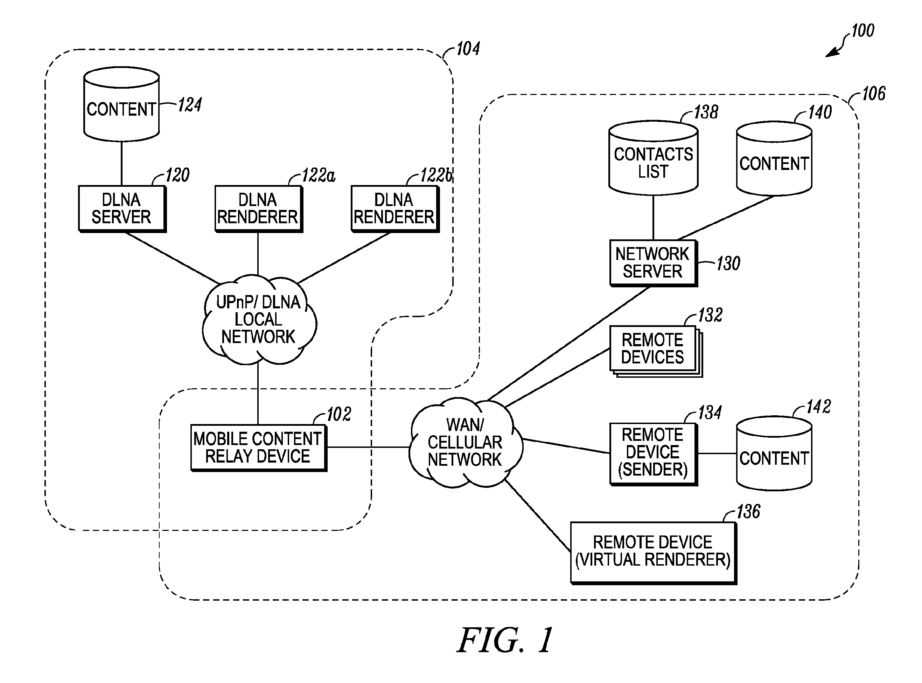

Referring now to the drawings, FIG. 1 is a block diagram of an exemplary embodiment of a system 100 having a mobile content relay device 102. The mobile content relay device 102 is suitably configured to support concurrent operation in at least two different communication networks, namely, a local network 104 and a remote network 106. As depicted by the dashed lines in FIG. 1, the mobile content relay device 102 may be considered to be a member of both networks 104, 106 (under certain operating conditions). Although not always required, the local network 104 for this particular embodiment is a UPnP network of devices that are located within relatively short range of one another. In particular implementations such as the example presented here, the devices in the local network 104 are compliant with DLNA standards, protocols, and operating specifications. Other than the mobile content relay device 102, the devices in the remote network 106 are not considered to be members of the local network 104. Although not always required, the remote network 106 for this particular embodiment is a WAN, which may include or cooperate with one or more network communication technologies, protocols, standards, and specifications. In this regard, the remote network 106 may include or cooperate with one or more of the following, without limitation: the Internet; a cellular telecommunication network (e.g., a 3G, 4G, UMTS, or other network); a satellite communication network; the Public Switched Telephone Network (PSTN); or the like. For the particular examples presented here, the remote network 106 is a UMTS network that supports messaging protocols such as IMPS.

Devices within the local network 104 (including the mobile content relay device 102) communicate with one another using "local" data communication links, which may be wireless, non-wireless, or a combination thereof. In this regard, the transport mechanism between any two devices in the local network 104 may use, without limitation: Wi-Fi; BLUETOOTH; Ethernet; USB; HDMI; WiMax; or the like. Moreover, although not always required, the devices within the local network 104 communicate data in accordance with UPnP and DLNA standards, protocols, and specifications.

Devices within the remote network 106 communicate with the mobile content relay device 102 using "remote" data communication links, which may be wireless, non-wireless, or a combination thereof. In this regard, the transport mechanism between the mobile content relay device 102 and the other devices in the remote network 106 may use, without limitation: cellular telecommunication technology such as UMTS, 3G, 4G, LTE, Code Division Multiple Access (CDMA), or the like; satellite telecommunication technology; the Internet; or the like.

In accordance with established DLNA standards, the local network 104 may include at least one DLNA server 120 and at least one DLNA renderer device 122. The mobile content relay device 102 may, but need not, function as the DLNA controller device for the local network 104. The DLNA server 120, which may also include DLNA renderer and/or DLNA controller functionality, includes or cooperates with a suitable database, memory element, or other content storage element 124, which is used to store and maintain digital content (e.g., picture files, video files, audio files, multimedia files, streaming audio content, streaming video content, or the like) that can be distributed and shared among other DLNA-compatible devices in the local network 104 and among virtual DLNA devices operating in the remote network 106. A DLNA renderer device 122, which may also include DLNA server and/or DLNA controller functionality, is suitably configured to render, play, execute, or otherwise present content using its native rendering capabilities. In certain embodiments, a renderer device can be used to modify the received content (before rendering the content, after rendering the content, or without rendering the content). For example, a renderer device may be able to edit, crop, adjust display settings, change pixel resolution, and/or otherwise alter one or more characteristics of the received content. In practice, a DLNA renderer device 122 may be, without limitation: a computer device, which may be a desktop computer, a laptop computer, a netbook computer, a tablet computer, or a handheld computer; a television; a video services receiver (sometimes referred to as a set-top box); a digital media player; a cellular telephone; a video game console or device; stereo or home theater equipment; or the like.

The remote network 106 may include, without limitation, at least one network server 130 and any number of remote devices (which are remote relative to the local network 104 and relative to the mobile content relay device 102). In this regard, the remote network 106 might include some conventional remote devices 132 that do not support the content delivery features and functions described here. This example assumes that the remote network 106 includes at least one remote content delivery device 134 and at least one virtual DLNA renderer device 136. A remote device operating in the remote network 106 may be a mobile device or a non-mobile device. In this regard, a remote device (including remote content delivery devices and virtual DLNA renderer devices) may be, without limitation: a desktop computer device; a television; a video services receiver (sometimes referred to as a set-top box); a digital media player; a cellular telephone; a video game console or device; stereo or home theater equipment; or the like.

The network server 130 includes or cooperates with a suitable database, memory element, or other storage element 138, which may be used to maintain and store contacts lists for one or more devices in the local network 104 and/or for one or more devices in the remote network 106 (as described in more detail below). The network server 130 may also include or cooperate with a suitable database, memory element, or other content storage element 140, which may be used to maintain and store digital content (e.g., picture files, video files, audio files, multimedia files, or the like) that can be delivered to certain DLNA-compatible devices in the local network 104, as requested by a device in the remote network such as the content delivery device 134. Alternatively or additionally, the content delivery device 134 might include or cooperate with its own database, memory element, or other content storage element 142 that stores digital content available to the content delivery device 134.

In certain implementations, the network server 130 is responsible for storing presence information for users that appear in a contacts list. The network server 130 may notify users that have subscribed to "listen" for presence changes for users in a contacts list. The network server 130 may also support "store-and-forward" functionality. In this regard, if the destination device is offline or otherwise unavailable, the network server 130 can buffer the outgoing message (with content) for later delivery whenever the destination device becomes available.

The mobile content relay device 102 (which may also include DLNA server, DLNA renderer, and/or DLNA controller functionality) is configured for operation in both the local network 104 and the remote network 106. Under certain conditions, the mobile content relay device 102 supports concurrent operation in both networks 104, 106. As explained in more detail below, the mobile content relay device 102 may be operated in one mode to support DLNA-to-WAN content delivery from the local network 104 to the virtual DLNA renderer device 136. Alternatively or additionally, the mobile content relay device 102 may be operated in another mode to support WAN-to-DLNA content delivery from the remote network 106 to a DLNA renderer device 122.

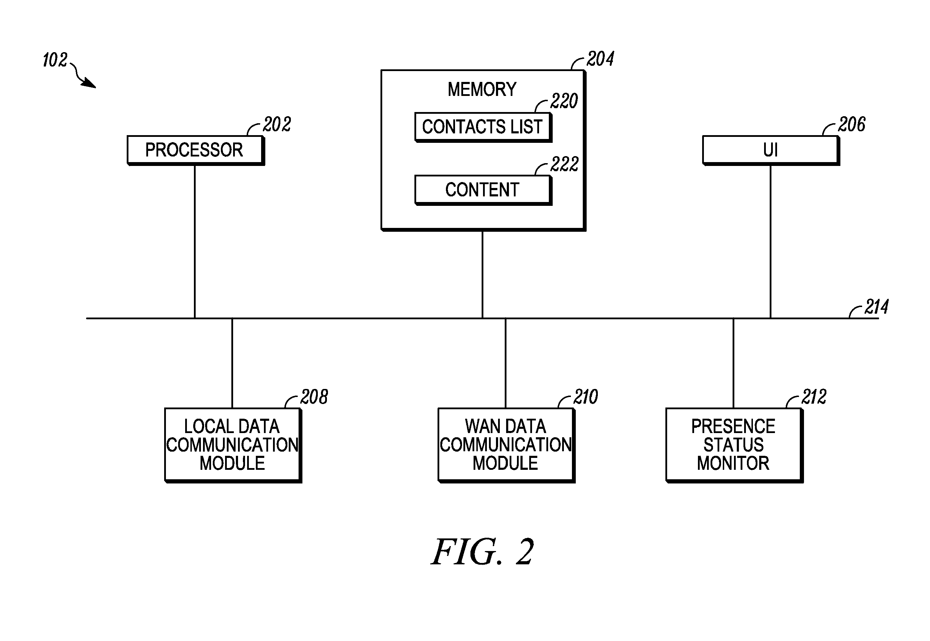

FIG. 2 is a block diagram of the mobile content relay device 102. The mobile content relay device 102 may be realized in the form of a mobile telephone, a personal digital assistant, a mobile computer device (e.g., a laptop computer, a netbook computer, a tablet computer, or a handheld computer), a digital media player, or the like. The illustrated embodiment of the mobile content relay device 102 generally includes, without limitation: at least one processor 202; an appropriate amount of memory 204; a user interface 206; a local data communication module 208; a WAN data communication module 210; and a presence status monitor 212. Some or all of these elements may be coupled together with a bus 214 or any suitable interconnection arrangement or architecture. An exemplary embodiment of the mobile content relay device 102 may include additional elements, components, features, and/or functionality associated with conventional operating aspects, and such conventional aspects will not be described in detail herein. Moreover, although FIG. 2 depicts certain elements as distinct blocks or modules, the processor 202 may include or incorporate additional functional components (or portions thereof) of the mobile content relay device 102, such as the local data communication module 208, the WAN data communication module 210, or the presence status monitor 212.

In certain implementations, the processor 202 may be realized with any number of hardware, software, and/or firmware components, and it may include any number of logical or functional modules. The processor 202 may be implemented with a general purpose processor, a content addressable memory, a digital signal processor, an application specific integrated circuit, a field programmable gate array, any suitable programmable logic device, discrete gate or transistor logic, discrete hardware components, or any combination designed to perform the functions described here. Moreover, the processor 202 may be realized as a microprocessor, a controller, a microcontroller, or a state machine. Moreover, the processor 202 may be implemented as a combination of computing devices, e.g., a combination of a digital signal processor and a microprocessor, a plurality of microprocessors, one or more microprocessors in conjunction with a digital signal processor core, or any other such configuration.

The memory 204 may be realized as RAM memory, flash memory, EPROM memory, EEPROM memory, registers, a hard disk, a removable disk, a CD-ROM, or any other form of storage medium known in the art. In this regard, the memory 204 can be coupled to the processor 202 such that the processor 202 can read information from, and write information to, the memory 204. In the alternative, the memory 204 may be integral to the processor 202. As an example, the processor 202 and the memory 204 may reside in an ASIC. In this example, the memory 204 may be utilized to store a contacts list 220 for the mobile content relay device 102 and/or to store content 222 for the mobile content relay device 102. The memory 204 may also be utilized to store data associated with conventional operating features of the mobile content relay device 102.

The user interface 206 may include, without limitation: a keypad; one or more navigation buttons; a microphone; a speaker; a touchpad; a joystick or other cursor pointing mechanism; a display element (which may be realized as a touch-screen); or the like. Notably, the user interface 206 may be involved when the mobile content relay device 102 functions as a DLNA renderer device (e.g., to display image or video content, to play audio content, etc.). In addition, the user interface 206 enables the user of the mobile content relay device 102 to manipulate applications and features supported by the mobile content relay device 102. In particular embodiments, the user interface 206 presents (e.g., displays) a contacts list corresponding to users of remote devices operating in the WAN, where at least one of the remote devices is a content delivery device identified as having permission to initiate delivery of content to DLNA renderer devices associated with the mobile content relay device 102. In other words, the user of the mobile content relay device 102 can view the contacts list to quickly determine whether or not a given remote device is authorized to send content to the mobile content relay device 102. The permission information may alternatively or additionally indicate whether or not a given WAN-based content delivery device is authorized to send content to a selected DLNA renderer device (using the mobile content relay device 102 as the intermediary). In practice, the user of the mobile content relay device 102 (or, equivalently, the mobile content relay device 102 itself) can control, regulate, grant, and revoke permissions related to the receipt of content from external network sources.

The local data communication module 208 may represent processing logic, hardware, software, and/or firmware that is suitably configured to support wireless and/or non-wireless communication protocols, schemes, and techniques utilized by the local network 104 (see FIG. 1). The local data communication module 208 may support any number of suitable wireless data communication protocols, techniques, or methodologies, including, without limitation: BLUETOOTH; ZigBee (and other variants of the IEEE 802.15 protocol); IEEE 802.11 (any variation); IEEE 802.16 (WiMAX or any other variation); wireless home network communication protocols; and proprietary wireless data communication protocols such as variants of Wireless USB. In certain embodiments, the local data communication module 208 supports wireless local area network (Wi-Fi) and UPnP data communication with members of the local network 104. More specifically, the local data communication module 208 is compliant with DLNA standards, as described here. The local data communication module 208 may alternatively or additionally support non-wireless data communication within the local network 104, e.g., Ethernet, USB, or the like.

In certain embodiments, the mobile content relay device 102 may include a suitably configured module that performs or supports LAN device discovery and session establishment. This LAN module (not separately shown in FIG. 2) may be implemented with the local data communication module 208 or it might cooperate with the local data communication module 208. The LAN module may be used to explicitly capture the UPnP stack as needed. In such an embodiment, the local data communication module 208 may represent data communication stacks, such as Wi-Fi and BLUETOOTH.

The WAN data communication module 210 may represent processing logic, hardware, software, and/or firmware that is suitably configured to support wireless and/or non-wireless communication protocols, schemes, and techniques utilized by the mobile content relay device 102 to access the remote network 106. Accordingly, the WAN data communication module 210 supports data communication with virtual renderer devices that are not members of the local network 104. In certain embodiments, the WAN data communication module represents a cellular communication radio module that supports communication with a cellular network using known techniques and technologies. A cellular radio may include any number of radio frequency (RF) front end components, any number of antennas, any number of transmitters, any number of receivers, and/or any number of transceivers, depending upon the particular implementation. In this regard, the WAN data communication module 210 may support any number of suitable wireless data communication protocols, techniques, or methodologies, including, without limitation: CDMA; GSM; 3G; and 4G-based protocols. Alternatively or additionally, the WAN data communication module 210 may be suitably configured to support data communication with the remote network using one or more non-wireless links, such as a cable or landline telephone system based modem that provides Internet access, a traditional local area network (LAN) interface, or the like.

The presence status monitor 212, which may be wholly or partially realized using the processor 202, represents the processing logic, hardware, software, and/or firmware that is suitably configured to monitor the current operating or presence status of various devices operating within the system 100. For example, the presence status monitor 212 can be used to monitor the current status of the mobile content relay device 102 (e.g., available, on, off, unavailable), and/or to monitor the current presences status of the user of the mobile content relay device 102 (e.g., available, busy, away, do not disturb). As another example, the presence status monitor 212 could be used to monitor the current status of a DLNA renderer device 122 within the local network 104 (e.g., unavailable for rendering, off, out of range, available for content delivery). In certain embodiments, the presence status monitor 212 may be used to monitor the current status of remote devices within the remote network 106 (e.g., unavailable for rendering, off, available for content delivery, authorized delivery device, unauthorized delivery device, etc.). In practice, the presence status monitor 212 may be designed to receive, analyze, and respond to current status data or current presence information provided by the DLNA devices in the local network 104, the network server 130, and/or the remote devices in the remote network 106.

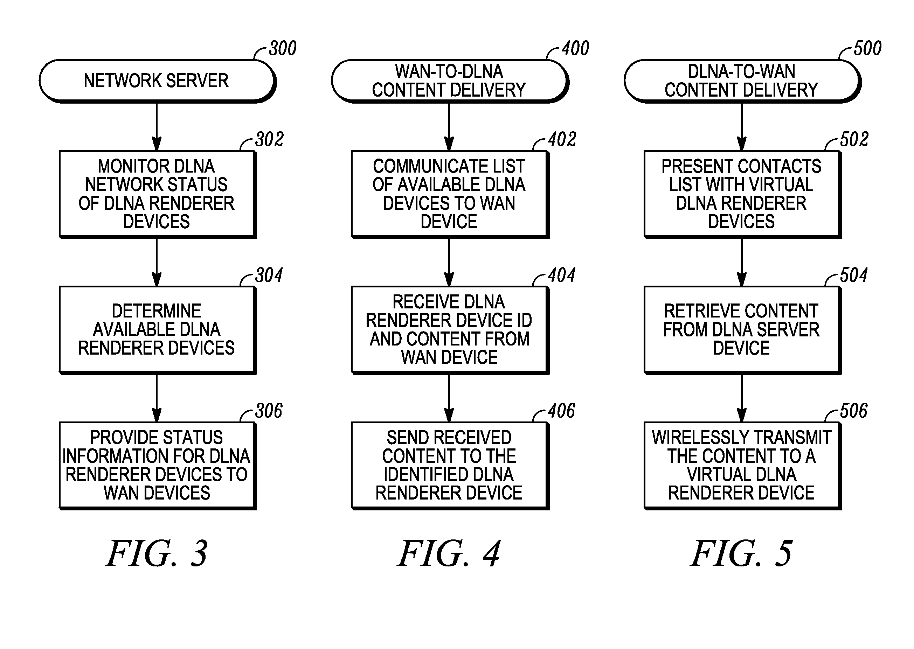

As mentioned briefly above, the system 100 (see FIG. 1) supports WAN-to-DLNA content delivery and DLNA-to-WAN content delivery, using the mobile content relay device as a "proxy" or an "interface" between the local network 104 and the remote network 106. Notably, the system 100 supports certain rich presence functionality that enhances the user experience and promotes efficient and effective use of network resources for purposes of content delivery. In this regard, FIG. 3 is a flow chart that illustrates an exemplary embodiment of a network server operating process 300. The process 300 may be performed by a network server that resides in the remote network 106, such as the network server 130. The various tasks performed in connection with an illustrated and described process may be performed by software, hardware, firmware, or any combination thereof. For illustrative purposes, the following description of certain processes may refer to elements mentioned above in connection with FIG. 1 and FIG. 2. In practice, portions of a described process may be performed by different elements of the described system, e.g., the mobile content relay device, a DLNA renderer device, a network server device, a virtual DLNA renderer device, etc. It should be appreciated that a described process may include any number of additional or alternative tasks, the tasks shown in the figures need not be performed in the illustrated order, and a described process may be incorporated into a more comprehensive procedure or process having additional functionality not described in detail herein. Moreover, one or more of the tasks shown in a figure could be omitted from an embodiment of the respective process as long as the intended overall functionality remains intact.

Referring to FIG. 3, the process 300 may be performed by a network server to support content delivery to DLNA renderer devices operating in a local network. In this regard, the process 300 monitors the local network status of one or more DLNA renderer devices in the local network (task 302). In certain embodiments, the process 300 receives current status data that indicates the current presence and/or operating status of the DLNA renderer devices in the local network. This current status data may be received from the mobile content relay device operating in the DLNA network. In practice, the mobile content relay device communicates the current presence status data using the chosen WAN data communication scheme, such as UMTS. The process 300 may then continue by determining, based on the received presence status data, which of the DLNA renderer devices are currently available to receive content from the mobile content relay device (task 304).

The network server could maintain and update a contacts list that contains entries for some or all of the DLNA renderer devices in the local network, where each entry indicates the current content delivery status of its respective DLNA renderer device. This contacts list might also contain an entry for the mobile content relay device (indicating the current content delivery status or availability of the mobile content relay device). With reference to FIG. 1, for example, the contacts list may include one entry corresponding to the DLNA server 120, one entry corresponding to the DLNA renderer device 122a, one entry for the DLNA renderer device 122b, and one entry for the mobile content relay device 102. In addition, each entry could include a presence status indicator such as, without limitation: "unavailable," "busy," "do not disturb," "available for playback," "available for downloading," "out of range," or the like.

The process 300 continues by providing identifying information to one or more remote devices operating in the WAN (task 306) outside the local network. In practice, the network server communicates the identifying information to remote devices using one or more data communication schemes supported by the remote network. For example, the identifying information could be sent to the remote devices using cellular telecommunication links, the Internet, satellite telecommunication links, wireless or non-wireless links, Wi-Fi, Ethernet, etc.

The identifying information identifies or otherwise indicates the available DLNA renderer devices and their respective available status. In accordance with certain embodiments, task 306 is associated with the provision of a current contacts list (with rich presence status information) to remote devices that are capable of functioning as remote content delivery devices. For example, the user of a remote computer device or a remote cellular telephone device could view his or her contacts list for an applicable application or program (e.g., an email application, an instant messaging application, a chat room feature, an online social networking application, the native address book feature, etc.), and that contacts list will include entries for one or more DLNA renderer devices operating within the local network established in the home of another person, along with the current content delivery status of those DLNA renderer devices. The remote user can view the presence information for the DLNA renderer devices to quickly determine which (if any) of those DLNA renderer devices are currently able to receive content from the remote user's device. In wireless environments, the presence information may indicate whether or not a given DLNA renderer device is within wireless range of the mobile content relay device operating in the local network.

FIG. 4 is a flow chart that illustrates an exemplary embodiment of a WAN-to-DLNA content delivery process 400. The process 400 can be performed to accommodate the delivery of digital content intended for rendering at a DLNA renderer device operating within a local network. The process 400 may begin by communicating a list of one or more available DLNA rendering devices to a WAN-based content delivery device (task 402). The content delivery device is operating in a WAN that is external to and distinct from the local network in which the mobile content relay device is operating. The communicated list represents a list of those DLNA rendering devices in the local network that are currently available for receiving and/or rendering content from external sources. In practice, the list may originate from the mobile content relay device or from another device in the local network (such as a DLNA server or controller). In some scenarios, a device operating in the local network provides the list to a server or other device operating in the WAN, which in turn delivers the list to the content delivery device in the WAN. This particular example assumes that the list (or update data that reflects changes to the list) is communicated from the mobile content relay device.

The process 400 relates to the operation of the mobile content relay device in connection with receiving content from a remote content delivery device. If for some reason the mobile content relay device is not available or is otherwise unable to receive data, then the content could be saved at the network server 130 (for later transmission to the mobile content relay device) or it could be queued at the content delivery device until the mobile content relay device is available. This example assumes that the mobile content relay device is currently available. Accordingly, the process 400 may continue by receiving a device identifier, along with some content (task 404). The device identifier identifies or otherwise indicates at least one selected DLNA rendering device that represents a destination device for the content. The content may be any type of content intended for presentation at the selected DLNA rendering device(s). In a typical scenario, a user of a WAN-based content delivery device selects a destination DLNA rendering device from the list that was communicated in task 402, and selects the content to be sent to that DLNA rendering device. Accordingly, the mobile content relay device may receive a DLNA renderer device identifier and the selected content from the remote content delivery device.

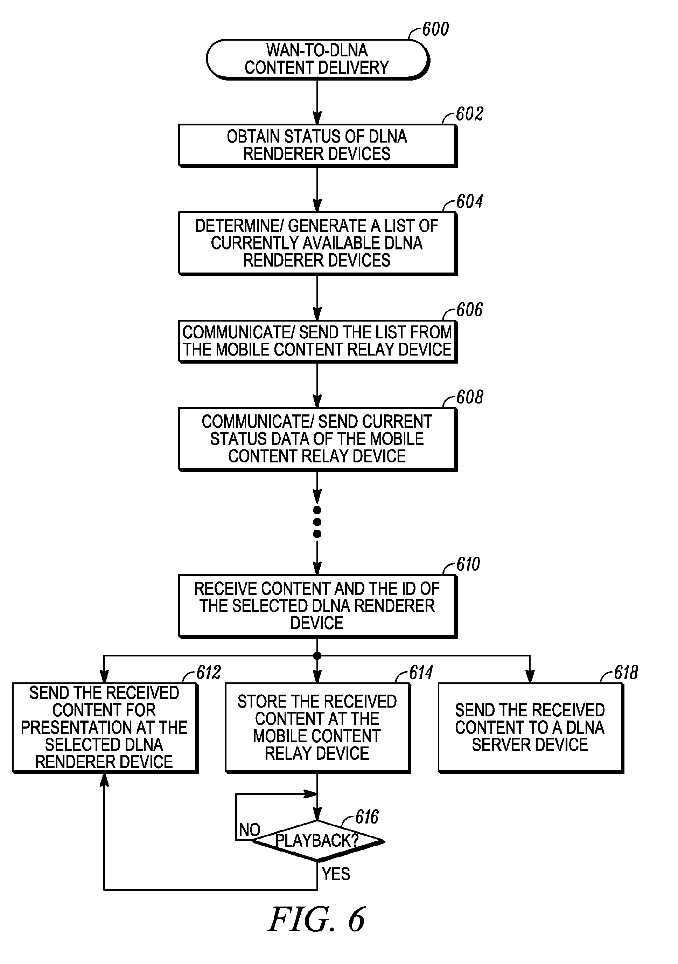

The mobile content relay device sends the received content to one or more devices operating in the local DLNA network for presentation at a selected DLNA rendering device (task 406). Task 406 may be associated with the transfer or downloading of an entire content file, or with the transmission of a streaming media file. In certain implementations, the mobile content relay device communicates the content via a wireless link. For example, the mobile content relay device may use Wi-Fi or BLUETOOTH as the data transport mechanism, and the content may be sent in a manner that is compliant with UPnP and DLNA standards and protocols. It should be appreciated that the process 400 has been simplified to present the general concepts in a concise manner. Additional details of an exemplary WAN-to-DLNA content delivery process are described below with reference to FIG. 6.

A mobile content relay device may also support "outgoing" content delivery from the DLNA network to outside destination devices. In this regard, FIG. 5 is a flow chart that illustrates an exemplary embodiment of a DLNA-to-WAN content delivery process 500. The process 500 represents one exemplary embodiment of an operating method for a mobile content relay device in a UPnP network. The illustrated embodiment of the process 500 begins by presenting a contacts list at the mobile content relay device (task 502). This contacts list corresponds to users of devices operating in a remote network (e.g., a WAN) outside of the local network (e.g., the UPnP network). The contacts list contains entries (or only one entry) for one or more virtual renderer devices operating in the remote network. In certain embodiments, the contacts list identifies virtual DLNA renderer devices that have provided permission information or other authorization data to the mobile content relay device. In other words, it may be desirable to limit the ability of the process 500 to send content in an unfettered manner to any remote device.

The process 500 assumes that the mobile content relay device identifies or selects some content to be delivered, and identifies or selects at least one virtual DLNA renderer device as a destination device. Accordingly, the process 500 may continue by retrieving content intended for a virtual DLNA renderer device (task 504). In practice, task 504 may be associated with the retrieval of the selected content from a DLNA server operating in the local network. In this regard, task 504 may require communication between the mobile content relay device and a separate and distinct DLNA server device. Alternatively, task 504 may be associated with the mobile content relay device retrieving the selected content from its own internal memory (or from a memory or storage element that is attached thereto). In the latter scenario, the mobile content relay device operates as both the DLNA server device and the DLNA relay or proxy device. In the former scenario, the mobile content relay device may retrieve the content in accordance with a UPnP data communication scheme, using the particular data communication transport mechanism supported between the mobile content relay device and the DLNA server (e.g., Wi-Fi, BLUETOOTH, Ethernet, USB, etc.). In certain embodiments, the mobile content relay device retrieves the selected content in accordance with DLNA standards, specifications, and protocols.

The process 500 may continue by sending the retrieved content to the selected destination device (task 506). More specifically, the mobile content relay device wirelessly transmits the retrieved content in a manner that is intended to reach the virtual DLNA renderer device. In practice, the mobile content relay device utilizes its native WAN data communication scheme to send the content. In particular embodiments, the WAN data communication scheme employs cellular telecommunication links based on UMTS technology, 3G technology, 4G technology, or the like. Moreover, the WAN data communication scheme employs IMPS (or any suitable messaging protocol) to accommodate the transfer of the content to the virtual DLNA renderer device. Upon receipt, the virtual DLNA renderer device can present the content to the remote user, store the content, or otherwise process the message as desired.

FIG. 6 is a flow chart that illustrates another exemplary embodiment of a WAN-to-DLNA content delivery process 600. The general approach of the process 600 is similar to that described above for the process 400. For this reason, common tasks, operations, and aspects will not be redundantly described in detail here for the process 600. For this embodiment, the mobile content relay device obtains the local network status of renderer devices in the local network (task 602). The mobile content relay device could obtain status data from the DLNA renderer devices, or it could derive or infer the status by monitoring data traffic, wireless signal strength, or other characteristics related to the operating status, presence, or condition of the DLNA renderer devices. The process 600 may then determine or generate a list of DLNA renderer devices that are currently available for receiving or rendering content (task 604). The list can be determined from the current local status of the renderer devices, and the list will preferably indicate the current availability status of each DLNA renderer device that is a member of the DLNA network.

The mobile content relay device may then send the list of available DLNA renderer devices to one or more devices or components in the remote network (task 606), as described above for the task 402 of the process 400. The mobile content relay device may also send its own current status data to one or more devices or components in the remote network (task 608). The current status data of the mobile content relay device indicates whether the mobile content relay device is available to receive content from a remote content delivery device. In this regard, the current status data might indicate whether the mobile content relay device is powered on, inactive, idle, or the like. The current status data could also convey rich presence status information associated with the user of the mobile content relay device, e.g., "busy," "away," "do not disturb," "available," or the like. In this regard, the user of a remote content delivery device can consider the availability of the renderer devices and/or the availability of the mobile content relay device when deciding whether or not to send content.

This example assumes that a content delivery device sends content to the mobile content relay device, where the content is intended for a selected DLNA renderer device in the local network. Accordingly, the process 600 receives the selected content and the identifier of the selected DLNA renderer device (task 610), as described above for the task 404 of the process 400. In practice, the received content can be handled in different ways by the local network devices, depending on various conditions, user settings, and the status of the DLNA renderer devices. In this regard, FIG. 6 depicts three possible scenarios, which are neither exhaustive nor intended to limit the scope or application of the embodiments described here.

In accordance with a first scenario, the mobile content relay device communicates the received content in a manner that is intended for immediate or real-time presentation at the selected DLNA renderer device (task 612), or at least immediate delivery to the selected DLNA renderer device. Task 612 is similar to the task 406 described above for the process 400. In certain implementations, therefore, task 612 involves the direct communication of the content from the mobile content relay device to the designated DLNA renderer device.

In accordance with a second scenario, the received content is stored at the mobile content relay device (task 614). Task 614 may be desirable or necessary when the identified DLNA renderer device is inactive or currently unavailable. Storing the content at the mobile content relay device may also be performed by default regardless of whether the content is relayed to another DLNA device in the local network. This example assumes that the content is maintained at the mobile content relay device until the process 600 detects a playback command. The playback command may be generated in response to user manipulation of a user interface, and it initiates the communication of the stored content to the designated DLNA renderer device. If a playback command is detected (query task 616), then the process sends the content for presentation at the selected DLNA renderer device (task 612).

In accordance with a third scenario, the mobile content relay device sends the received content to a DLNA server device operating in the local network (task 618). Task 618 may be desirable to preserve the received content for future playback and rendering when desired. In certain implementations, storing the content at a DLNA server device may be performed by default regardless of whether the content is relayed to another DLNA device and regardless of when the content is actually rendered. Thus, depending upon the operating conditions and/or the desired content delivery options, the mobile content relay device might communicate the received content directly to the identified DLNA renderer device for immediate playback, or it could communicate the received content to a DLNA server operating in the local network for further relaying to the intended DLNA renderer device. Moreover, the mobile content relay device could store the received content in its internal memory and/or communicate the received content to a DLNA server device operating in the local network for storage. These variations provide flexibility to the system and give the user different playback options.

The mobile content relay device could be configured with user settings that handle incoming content in a customized manner. For example, the mobile content relay device might support a feature that allows the user to specify how content from designated remote content delivery devices is handled. Thus, the mobile content relay device could direct all content received from a particular remote user (or a particular remote user device) to a certain DLNA renderer device. As another example, all content received during a user-specified time window could be automatically stored at the mobile content relay device and/or automatically sent to a DLNA server for storage. As yet another example, the mobile content relay device could be configured to reject certain types of content (e.g., video content), and/or to direct specified content (e.g., music content) to a designated DLNA renderer device.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A mobile content relay device (102) operable on a wide area network , WAN, and a local network (104), comprising:
a user interface element (206) to present a contacts list corresponding to users of remote devices operating in the WAN, wherein in the contacts list at least one of the remote devices (132, 134) is a content delivery device (134) identified as having permission to initiate delivery of content to renderer devices (122a, 122b) associated with the mobile content relay device (102), the renderer devices (122a, 122b) being members of the local network (104); and
a processor (202) operable to control the mobile content relay device (102) to communicate to the content delivery device (134) identifying information of available renderer devices operating in the local network (104) and currently available to the mobile content relay device (102), and the processor (202) responsive to communications from the content delivery device (134) including selected content and a device identifier of a selected one of the available renderer devices (134), to control the mobile content relay device (102) to communicate the selected content received from the content delivery device (134) to the selected renderer device.

2. The mobile content relay device (102) of claim 1, wherein the contacts list is stored at the mobile content relay device (102).

3. The mobile content relay device (102) of claim 1, wherein the contacts list is stored at a network server that communicates with the mobile content relay device (102).

4. The mobile content relay device (102) of claim 1, wherein the identifying information indicates that the available renderer devices are currently within wireless range of the mobile content relay device (102) operating in the local network.

5. The mobile content relay device (102) of claim 1, wherein the permission indicates that the mobile content relay device (102) has authorized the content delivery device to send content to the mobile content relay device (102).

6. The mobile content relay device (102) of claim 1, wherein the permission indicates that the content delivery device is authorized to send content to the selected renderer device using the mobile content relay device (102) as a content relay device.

7. The mobile content relay device (102) of claim 1, wherein the selected content comprises digital content selected from the group consisting of: an audio file; streaming audio content; a video file; streaming video content; and a picture file.

8. An operating method for a mobile content relay device (102) in a local network (104), the method comprising:
communicating (402), to a content delivery device operating in a wide area network, WAN, external to the local network, a list of one or more rendering devices in the local network that are currently available for rendering content;
receiving (404), from the content delivery device, an identifier of a selected one of the rendering devices and content intended for presentation at the selected one of the rendering devices; and
sending (406) the received content from the mobile content relay device for presentation at the selected one of the rendering devices.

9. The method of claim 8, wherein sending the received content comprises communicating the received content from the mobile content relay device directly to the selected one of the rendering devices.

10. The method of claim 8, wherein sending the received content comprises communicating the received content from the mobile content relay device to a server device operating in the local network.

11. The method of claim 8, further comprising storing the received content at the mobile content relay device until detecting a playback command at the mobile content relay device, wherein sending the received content is performed in response to detecting the playback command.

12. The method of claim 8, further comprising:
obtaining, at the mobile content relay device, local network status of renderer devices in the local network; and
determining, from the local network status, the list of one or more rendering devices in the local network that are currently available for rendering content.

13. The method of claim 8, further comprising sending, to the content delivery device, current status data of the mobile content relay device, the current status data indicating whether the mobile content relay device is available to receive content from the content delivery device.

## Patentansprüche

1. Mobile Inhalts-Relaisvorrichtung (102), die in einem Weitverkehrsnetz (WAN) und einem lokalen Netz (104) betrieben werden kann, wobei die Relaisvorrichtung Folgendes aufweist:
ein Nutzerschnittstellenelement (206), um eine Kontaktliste, die Nutzern von Fernvorrichtungen, die im WAN betrieben werden, entspricht, vorzulegen, wobei in der Kontaktliste wenigstens eine der Fernvorrichtungen (132, 134) eine Inhaltsliefervorrichtung (134) ist, die als eine Erlaubnis zur Einleitung einer Lieferung von Inhalt an Renderervorrichtungen (122a, 122b), die der mobilen Inhalts-Relaisvorrichtung (102) zugehörig sind, aufweisend identifiziert wurde, wobei die Renderervorrichtungen (122a, 122b) Teile des lokalen Netzes (104) sind; und
einen Prozessor (202), der zur Steuerung der mobilen Inhalts-Relaisvorrichtung (102) betriebsbereit ist, um der Inhaltsliefervorrichtung (134) Identifikationsinformationen verfügbarer Renderervorrichtungen mitzuteilen, die im lokalen Netz (104) betrieben werden und derzeit für die mobile Inhalts-Relaisvorrichtung (102) verfügbar sind, und wobei der Prozessor (202) auf Kommunikationen von der Inhaltsliefervorrichtung (134) anspricht, die ausgewählten Inhalt und eine Vorrichtungskennung einer ausgewählten Renderervorrichtung der verfügbaren Renderervorrichtungen (134) aufweisen, um die mobile Inhalts-Relaisvorrichtung (102) so zu steuern, dass der von der Inhaltsliefervorrichtung (134) empfangene ausgewählte Inhalt an die ausgewählte Renderervorrichtung kommuniziert wird.

2. Mobile Inhalts-Relaisvorrichtung (102) nach Anspruch 1, wobei die Kontaktliste in der mobilen Inhalts-Relaisvorrichtung (102) gespeichert ist.

3. Mobile Inhalts-Relaisvorrichtung (102) nach Anspruch 1, wobei die Kontaktliste in einem Netzserver gespeichert ist, der mit der mobilen Inhalts-Relaisvorrichtung (102) kommuniziert.

4. Mobile Inhalts-Relaisvorrichtung (102) nach Anspruch 1, wobei die Identifikationsinformationen anzeigen, dass die verfügbaren Renderervorrichtungen derzeit innerhalb einer drahtlosen Reichweite der mobilen Inhalts-Relaisvorrichtung (102) sind.

5. Mobile Inhalts-Relaisvorrichtung (102) nach Anspruch 1, wobei die Erlaubnis anzeigt, dass die mobile Inhalts-Relaisvorrichtung (102) die Inhaltsliefervorrichtung autorisiert hat, Inhalt an die mobile Inhalts-Relaisvorrichtung (102) zu senden.

6. Mobile Inhalts-Relaisvorrichtung (102) nach Anspruch 1, wobei die Erlaubnis anzeigt, dass die Inhaltsliefervorrichtung dazu autorisiert ist, Inhalt an die ausgewählte Renderervorrichtung unter Verwendung der mobilen Inhalts-Relaisvorrichtung (102) als Inhalts-Relaisvorrichtung zu senden.

7. Mobile Inhalts-Relaisvorrichtung (102) nach Anspruch 1, wobei der ausgewählte Inhalt digitalen Inhalt ausgewählt aus der Gruppe bestehend aus einer Audiodatei; Streaming-Audioinhalt; einer Videodatei; Streaming-Videoinhalt und einer Bilddatei aufweist.

8. Betriebsverfahren für eine mobile Inhalts-Relaisvorrichtung (102) in einem lokalen Netz (104), wobei das Verfahren Folgendes aufweist:
Kommunizieren (402) an eine Inhaltsliefervorrichtung, die in einem Weitverkehrsnetz (WAN) außerhalb des lokalen Netzes betrieben wird, einer Liste von einer oder mehreren Renderingvorrichtungen im lokalen Netz, die derzeit zum Rendern von Inhalt verfügbar sind;
Empfangen (404), von der Inhaltsliefervorrichtung, einer Kennzeichnung einer ausgewählten der Renderingvorrichtungen und von Inhalt, der für die Vorlage an der ausgewählten der Renderingvorrichtungen beabsichtigt ist; und
Senden (406) des empfangenen Inhalts von der mobilen Inhalts-Relaisvorrichtung zur Vorlage an der ausgewählten Renderingvorrichtung der Renderingvorrichtungen.

9. Verfahren nach Anspruch 8, wobei das Senden des empfangenen Inhalts ein Kommunizieren des empfangenen Inhalts von der mobilen Inhalts-Relaisvorrichtung direkt an die ausgewählte Renderingvorrichtung der Renderingvorrichtungen aufweist.

10. Verfahren nach Anspruch 8, wobei das Senden des empfangenen Inhalts ein Kommunizieren des empfangenen Inhalts von der mobilen Inhalts-Relaisvorrichtung an eine Servervorrichtung aufweist, die im lokalen Netz betrieben wird.

11. Verfahren nach Anspruch 8, das ferner ein Speichern des empfangenen Inhalts an der mobilen Inhalts-Relaisvorrichtung bis zur Erfassung eines Wiedergabebefehls an der mobilen Inhalts-Relaisvorrichtung aufweist, wobei das Senden des empfangenen Inhalts ansprechend auf das Erfassen des Wiedergabebefehls ausgeführt wird.

12. Verfahren nach Anspruch 8, das ferner Folgendes aufweist:
Erhalten, an der mobilen Inhalts-Relaisvorrichtung, eines Status eines lokalen Netzes von Renderervorrichtungen im lokalen Netz; und
Bestimmen, anhand des Status des lokalen Netzes, der Liste aus einer oder mehrerer Renderingvorrichtungen im lokalen Netz, die derzeit zum Rendern von Inhalt verfügbar sind.

13. Verfahren nach Anspruch 8, das ferner ein Senden an die Inhaltsliefervorrichtung von Daten über den derzeitigen Status der mobilen Inhalts-Relaisvorrichtung aufweist, wobei die Daten über den derzeitigen Status anzeigen, ob die mobile Inhalts-Relaisvorrichtung verfügbar ist, um Inhalt von der Inhaltsliefervorrichtung zu empfangen.

## Revendications

1. Dispositif relais de contenu mobile (102) pouvant être utilisé dans un réseau étendu, WAN, et un réseau local (104), comprenant :
un élément d'interface utilisateur (206) pour présenter une liste de contacts correspondant à des utilisateurs de dispositifs à distance fonctionnant dans le réseau étendu, dans lequel, dans la liste de contacts, au moins l'un des dispositifs à distance (132, 134) est un dispositif de distribution de contenu (134) identifié comme ayant la permission de lancer la distribution de contenu vers des dispositifs de reproduction (122a, 122b) associés au dispositif relais de contenu mobile (102), les dispositifs de reproduction (122a, 122b) étant des éléments du réseau local (104) ; et
un processeur (202) pouvant être utilisé pour commander le dispositif relais de contenu mobile (102) pour communiquer, au dispositif de distribution de contenu (134), des informations d'identification de dispositifs de reproduction disponibles fonctionnant dans le réseau local (104) et actuellement disponibles pour le dispositif relais de contenu mobile (102), et le processeur (202) réagissant à des communications provenant du dispositif de distribution de contenu (134) comprenant un contenu sélectionné et un identifiant de dispositif de l'un sélectionné des dispositifs de reproduction (134) disponibles, pour commander le dispositif relais de contenu mobile (102) pour communiquer le contenu sélectionné reçu du dispositif de distribution de contenu (134) au dispositif de reproduction sélectionné.

2. Dispositif relais de contenu mobile (102) selon la revendication 1, dans lequel la liste de contacts est mémorisée dans le dispositif relais de contenu mobile (102).

3. Dispositif relais de contenu mobile (102) selon la revendication 1, dans lequel la liste de contacts est mémorisée dans un serveur de réseau qui communique avec le dispositif relais de contenu mobile (102).

4. Dispositif relais de contenu mobile (102) selon la revendication 1, dans lequel les informations d'identification indiquent que les dispositifs de reproduction disponibles sont actuellement dans une plage sans fil du dispositif relais de contenu mobile (102) fonctionnant dans le réseau local.

5. Dispositif relais de contenu mobile (102) selon la revendication 1, dans lequel la permission indique que le dispositif relais de contenu mobile (102) a autorisé le dispositif de distribution de contenu à envoyer un contenu au dispositif relais de contenu mobile (102).

6. Dispositif relais de contenu mobile (102) selon la revendication 1, dans lequel la permission indique que le dispositif de distribution de contenu est autorisé à envoyer un contenu au dispositif de reproduction sélectionné en utilisant le dispositif relais de contenu mobile (102) en tant que dispositif relais de contenu.

7. Dispositif relais de contenu mobile (102) selon la revendication 1, dans lequel le contenu sélectionné comprend un contenu numérique sélectionné dans le groupe consistant en : un fichier audio ; un contenu audio en flux continu ; un fichier vidéo ; un contenu vidéo en flux continu ; et un fichier d'images.

8. Procédé de fonctionnement pour un dispositif relais de contenu mobile (102) dans un réseau local (104), le procédé comprenant :
la communication (402), à un dispositif de distribution de contenu fonctionnant dans un réseau étendu, WAN, à l'extérieur du réseau local, d'une liste d'un ou de plusieurs dispositifs de reproduction dans le réseau local qui sont actuellement disponibles pour reproduire un contenu ;
la réception (404), du dispositif de distribution de contenu, d'un identifiant de l'un sélectionné des dispositifs de reproduction et d'un contenu destiné à une présentation à celui sélectionné des dispositifs de reproduction ; et
l'envoi (406) du contenu reçu du dispositif relais de contenu mobile pour une présentation à celui sélectionné des dispositifs de reproduction.

9. Procédé selon la revendication 8, dans lequel l'envoi du contenu reçu comprend la communication du contenu reçu du dispositif relais de contenu mobile directement à celui sélectionné des dispositifs de reproduction.

10. Procédé selon la revendication 8, dans lequel l'envoi du contenu reçu comprend la communication du contenu reçu du dispositif relais de contenu mobile à un dispositif serveur fonctionnant dans le réseau local.

11. Procédé selon la revendication 8, comprenant en outre la mémorisation du contenu reçu dans le dispositif relais de contenu mobile jusqu'à la détection d'une commande de reproduction au niveau du dispositif relais de contenu mobile, dans lequel l'envoi du contenu reçu est effectué en réponse à la détection de la commande de reproduction.

12. Procédé selon la revendication 8, comprenant en outre :
l'obtention, dans le dispositif relais de contenu mobile, d'un état de réseau local des dispositifs de reproduction dans le réseau local ; et
la détermination, à partir de l'état de réseau local, de la liste d'un ou de plusieurs dispositifs de reproduction dans le réseau local qui sont actuellement disponibles pour reproduire un contenu.

13. Procédé selon la revendication 8, comprenant en outre l'envoi, au dispositif de distribution de contenu, des données d'état actuel du dispositif relais de contenu mobile, les données d'état actuel indiquant si le dispositif relais de contenu mobile est disponible pour recevoir un contenu du dispositif de distribution de contenu.
